# FASCICULE DE BREVET EUROPEEN

(11) **EP 2 766 191 B1**
(45) Date de publication et mention de la délivrance du brevet: **29.08.2018**
(21) Numéro de dépôt: 12770488.0
(22) Date de dépôt: 10.10.2012
(51) Int. Cl.: C09D 11/03, C09D 11/38, C09D 11/50, B42D 25/29, B42D 25/378

(54) **ENCRE BIODEGRADABLE POUR IMPRESSION ET/OU ECRITURE INFALSIFIABLE**
BIOLOGISCH ABBAUBARE TINTE FÜR NICHTFÄLSCHBAREN DRUCK UND/ODER SCHRIFT
BIODEGRADABLE INK FOR UNFORGEABLE PRINTING AND/OR WRITING

(30) Priorité: 14.10.2011 FR 1159312
(43) Date de publication de la demande: 20.08.2014
(73) Titulaire: NUTRINOV, 35530 Noyal-sur-Vilaine (FR)
(72) Inventeur: EFSTATHIOU, Théo, F-35740 Pace (FR); CLANCHIN, Olivier, F-35220 Châteaubourg (FR)
(74) Mandataire: Vidon Brevets & Stratégie
(86) Numéro de dépôt international: PCT/EP2012/070082
(87) Numéro de publication internationale: WO 2013/053774

(56) Documents cités:
- EP-A2- 1 621 359
- WO-A1-2010/130681
- FR-A1- 2 410 665

## Description

### 1. Domaine de l'invention

Le domaine de l'invention est celui de la formulation et de la fabrication des encres, à savoir des encres d'impression de supports tels que notamment les cartons, les papiers, les matériaux plastiques ou encore les tissus, ainsi que des encres pour l'écriture, telles que principalement les encres utilisées dans les stylos à bille ou les stylos à plume.

Plus précisément, l'invention concerne une encre qui est facilement biodégradable et qui permette de surcroît l'obtention d'une impression et/ou le cas échant d'une écriture infalsifiable.

On entend au sens de la présente description par les termes « impression infalsifiable » ou « écriture infalsifiable » une impression ou une écriture dont l'origine peut être déterminée grâce à la formulation de l'encre utilisée pour réaliser ladite impression ou ladite écriture. L'origine d'une impression peut être constituée par la structure émettrice d'un document imprimé avec ladite encre ou encore par la personne détenant un droit de propriété industrielle sur le produit imprimé avec ladite encre. L'origine d'une écriture est constituée par la personne ayant écrit avec un instrument d'écriture utilisant ladite encre.

Le caractère infalsifiable de l'impression ou de l'écriture pouvant être réalisée grâce à l'invention permet de faciliter l'authentification de l'origine de l'impression ou de l'écriture réalisée grâce à celle-ci, c'est-à-dire la détermination certaine de cette origine.

Ainsi, l'invention permet de connaître l'origine d'un produit et/ou d'une écriture et ainsi de lutter contre son imitation frauduleuse ou sa contrefaçon.

### 2. Art antérieur

La contrefaçon est un problème chronique qui revêt de nombreux aspects.

Elle peut notamment consister en la reproduction sans autorisation de produits protégés par des droits de propriété intellectuelle (marques, droits d'auteurs, brevets...). Parmi les produits contrefaits, de nombreux incluent au moins un élément imprimé grâce à des encres d'impression soit directement sur le produit soit sur leur emballage... En dépit de l'arsenal légal mis en place pour lutter contre de telles pratiques, les contrefacteurs améliorent sans cesse leurs techniques de reproduction, allant jusqu'à utiliser les mêmes matières premières que celles utilisées pour les produits d'origine, au point qu'il devient parfois très ardu de distinguer les copies des originaux.

La contrefaçon peut aussi consister en l'imitation frauduleuse de documents officiels ou de monnaie notamment de billets de banque. Pour tenter d'éradiquer ce type de trafics, les gouvernements et les institutions émettrices de monnaie ont mis au point des stratégies de plus en plus élaborées : utilisation de papiers particuliers pour l'impression, complexification des modèles de billets par l'utilisation d'hologrammes et/ou d'encres infalsifiables... L'objectif de ces stratégies est de freiner les contrefacteurs en multipliant les investissements financiers, matériels et intellectuels nécessaires à la reproduction des documents ou billets contrefaits. Ces stratégies nécessitent toutefois l'emploi de techniques et de machines de plus en plus élaborées et sont donc très coûteuses.

À titre d'exemples d'encres infalsifiables utilisées pour lutter contre la contrefaçon des billets de banques et des documents officiels, on peut citer celles incorporant des particules électrophorétiques, des encres thermochromiques, photochromiques, visibles aux infrarouges, fluorescentes ou encore phosphorescentes. Ces encres infalsifiables ont pour objectif de permettre, grâce à leurs caractéristiques particulières, l'identification de la source émettrice des documents ou des billets imprimés avec celles-ci.

On connaît notamment la technique divulguée dans la demande de brevet US-A-5847024 qui concerne une encre à base d'eau comprenant des agents absorbants de la lumière ultraviolet (UV) tels que les benzophénones, les benzotriazoles, les esters d'acide salicylique et les anilides d'acide oxalique.

Toutefois, ce type d'encre est extrêmement simple à reproduire pour un contrefacteur, en fournissant des efforts modérés de rétro-ingénierie (« reverse engineering » en langue anglaise).

On connaît également par la technique décrite dans la demande WO-A-0077104 l'authentification de billets ou de documents par un marqueur réalisé par un mélange d'encres ayant chacune des colorants et des propriétés optiques différentes (réflexion, absorbance, fluorescence). Chaque point du marqueur correspond à une encre particulière possédant sa propre réponse spectrale. Le mélange de ces encres résulte en une réponse spectrale différente de celle prédite par la simple addition des réponses de chaque encre. L'agencement et la séquence des différentes encres utilisées, sont programmés et analysés par un logiciel. L'utilisation de ce mélange complexe a pour objectif principal de gêner le travail du contrefacteur désireux de reproduire le marqueur.

Toutefois, ces encres infalsifiables, ou réputées telles, de l'art antérieur présentent de nombreux inconvénients.

Elles s'intègrent en effet dans des techniques complexes à mettre en oeuvre qui nécessitent des compétences particulières et des moyens matériels importants. En conséquence, si elles trouvent leur utilité pour la production de documents officiels ou de monnaie par les gouvernements, il n'est économiquement et pratiquement pas envisageable d'utiliser de telles encres pour lutter contre la contrefaçon d'autres types de produits ou de documents plus communs.

De plus, le caractère infalsifiable recherché pour de telles encres implique généralement l'utilisation de composants non biodégradables, voir toxiques.

Enfin la contrefaçon, au sens large du terme, peut aussi consister en la falsification de documents holographes et de signatures. Que ce soit sur des documents officiels, des testaments, ou des accords commerciaux, l'authentification d'une signature ou d'une écriture est déterminante. Or, les résultats d'analyse graphologique ne constituent pas une preuve indiscutable de l'origine de l'écriture analysée et ne permettent pas toujours d'authentifier une écriture ou une signature.

A la connaissance de la demanderesse, il n'existe pas d'encre commercialisée auprès du grand public, pouvant être utilisée dans des stylos à bille ou des stylos à plume notamment, qui puisse permettrent de déterminer l'origine de l'écriture, notamment l'origine d'une signature, effectuée avec une telle encre, et ainsi permettre de faciliter l'authentification de l'écriture ou de la signature en question.

La société Stabilo-Schwan commercialise bien le stylo CULTdocusafe™, dont la publicité dit qu'elle permet une écriture « infalsifiable ». Toutefois, le terme infalsifiable est ici utilisé pour traduire le fait que l'encre en question est stable au temps et à la lumière et donc ineffaçable. Il ne s'agit donc pas d'une encre permettant de déterminer l'origine de l'écriture effectuée grâce à elle. Ainsi, l'utilisation d'une telle encre ne peut participer en aucun cas à l'authentification d'une signature ou d'une écriture.

Il existe donc un besoin pour des encres utilisables pour l'impression sur de nombreux produits et/ou pour l'écriture qui soit infalsifiables en ce sens qu'elles permettent de cerner l'origine du produit ou du document qui la revête.

Ce besoin pour des encres infalsifiables co-existe au coté du besoin d'encres facilement biodégradables et non toxiques.

### 3. Objectifs de l'invention

Un objectif de l'invention est de fournir, dans au moins un mode de réalisation, une encre qui permette de déterminer l'origine des documents ou produits sur lesquels elle est appliquée.

Également un objectif de l'invention est de fournir, dans au moins un mode de réalisation, une encre qui permette de déterminer l'origine d'une écriture ou d'une signature.

Encore un autre objectif de l'invention est de fournir dans au moins un mode de réalisation, une encre qui permette de faciliter l'authentification d'un document, d'un produit, d'un écrit et/ou d'une signature, selon des techniques d'authentification simples à mettre en oeuvre.

Encore un autre objectif de la présente invention est de fournir une telle encre qui soit facilement biodégradable et non toxique et dont la mise en oeuvre présente un impact environnemental limité.

Également un objectif de l'invention est de fournir une encre dont certains des composés proviennent de sous-produits issus de processus industriels de transformation de végétaux.

L'invention a encore pour objectif de fournir une telle encre dont la formulation est simple et qui en conséquence est facile à produire.

### 4. Exposé de l'invention

Ces objectifs, ainsi que d'autres qui apparaîtront par la suite, sont atteints grâce à l'invention qui concerne une encre dont la formulation comprend au moins un solvant, au moins un agent colorant, au moins un agent mouillant et au moins un marqueur caractérisé en ce que :
- ledit solvant est choisi dans le groupe constitué par l'eau, les huiles végétales et résines naturelles,
- ledit agent mouillant est un agent biodégradable d'origine végétale, et
- ledit marqueur est un marqueur photoluminescent intégrant au moins un lanthanide.

On entend ici par « agent colorant », un colorant ou un pigment.

Ainsi, l'invention repose sur une approche originale consistant à proposer une encre à base d'eau ou d'huile ou résine naturelle dont parmi les autres composants au moins l'agent mouillant est également biodégradable et d'origine végétale et qui contient de plus un marqueur photoluminescent à base d'au moins un lanthanide.

On entend par photoluminescence le phénomène particulier manifesté par certains corps qui, soumis à un rayonnement, émettent, dans toutes les directions, un rayonnement de fréquence différente. Chaque lanthanide possède ainsi sa propre longueur d'onde d'émission.

Un type de marqueur apte à être utilisé dans le cadre de la présente invention est un marqueur tel que décrit dans la demande de brevet français FR-A-2917226. De tels marqueurs photoluminescents se présentent sous forme d'une poudre micronisée. Cette poudre micronisée est constituée d'un polymère de coordination se présentant sous la forme d'une cristallite obtenue par réaction d'au moins un ion lanthanide luminescent, préférentiellement plusieurs ions lanthanides photoluminescents, avec au moins un ligand organique insaturé.De telles cristallites émettent de la lumière sous irradiation UV. L'association de différents lanthanides au sein de telles cristallites permet de complexifier la détection de la longueur d'onde émise. Chaque cristallite présente sa propre longueur d'onde d'émission aux UV, celle-ci ne résultant pas de la simple addition des longueurs d'onde de chaque lanthanide la constituant.

Le très grand nombre de cristallites pouvant être réalisées selon la technique décrite dans ce document de brevet permettra de réaliser des encres selon l'invention « à façon », c'est-à-dire que chaque encre selon l'invention présentera une signature optique aisément différenciable et pourra ainsi être dédiée à un détenteur particulier. L'encre selon l'invention peut donc être spécifiquement conçue à destination d'un organisme ou d'une société particulière qui aura l'exclusivité de celle-ci.

Cette diversité offre en outre la possibilité de changer régulièrement le marqueur utilisé dans la formulation dédiée à un détenteur donné, ceci afin de complexifier davantage la tâche des contrefacteurs, et sans que cela n'interfère avec les formulations déjà proposées à d'autres utilisateurs d'encre d'impression ou d'écriture selon l'invention.

Un tel marqueur photoluminescent est incolore à la lumière blanche et détectable sous irradiation UV. Ainsi l'encre selon l'invention paraît quelconque aux yeux de n'importe quel consommateur ou contrefacteur potentiel, à la lumière blanche. On entend par lumière blanche, la lumière composée par l'ensemble des ondes électromagnétiques dont les longueurs d'onde sont comprises entre 380 nm et 780 nm. La détection sous irradiation UV ne nécessite que l'investissement d'une lampe UV. Cet appareillage est peu coûteux, léger, et extrêmement simple à utiliser. Aucune compétence particulière n'est nécessaire pour détecter un produit ou un document contrefaisant. Ainsi, l'utilisation de l'encre selon l'invention est elle compatible avec un contrôle de marchandises aux frontières, ou une authentification automatisée de documents ou de chèques.

Un autre avantage de ce type de marqueur est l'impossibilité de retrouver la formule de celui-ci, à partir de la seule longueur d'onde émise, par rétro-ingénierie.

Ces marqueurs sont, du reste, compatibles avec la formulation d'encres d'impression et d'encres d'écriture. Ils sont invisibles à l'oeil nu et n'altèrent pas la couleur de l'encre conférée par le ou les agents colorants.

Ils se présentent sous la forme d'une poudre micronisée de couleur blanche qu'il suffit de disperser sous agitation dans le solvant de l'encre. De très faibles quantités sont suffisantes pour obtenir l'effet recherché, à savoir une signature optique détectable uniquement sous UV.

La fabrication d'une telle encre ne nécessite par ailleurs pas de compétence particulière autre que celles d'un chimiste de laboratoire. Elle ne nécessite aucun investissement particulier pour sa fabrication ou sa mise en oeuvre. Elle est donc simple et économique à produire et mettre en oeuvre.

De plus, l'utilisation de composants d'origine naturelle, préférentiellement végétale, pour réaliser l'encre selon la présente invention permet de produire une encre respectueuse de l'environnement et limitant la production de déchets toxiques lors de la dégradation à long terme des produits ou des documents incorporant l'encre selon l'invention. L'encre selon l'invention est donc biodégradable. On entend par biodégradable la propriété d'une substance qui peut, sous l'action d'organismes vivants, se décomposer en éléments divers dépourvus d'effet dommageable sur le milieu naturel *(*Journal Officiel de la République Française du 12 avril 2009*).*

Selon l'invention, ledit solvant est un solvant aqueux ou huileux.

Le solvant permet de solubiliser les différents constituants de l'encre, et notamment les pigments et/ou les colorants.

L'utilisation d'un solvant huileux augmente la viscosité de l'encre et permet une écriture souple. Il permet également de lier les pigments au support et de les protéger en formant un film continu. De plus, les solvants huileux ne sont pas sujets à l'évaporation. Ils permettent de formuler une encre qui ne se dissout pas et ne se décolore pas lorsqu'elle est exposée à l'eau ou à la lumière. Les encres à base d'huile conviennent à la formulation d'encre d'imprimerie ou pour stylos à bille.

Un solvant aqueux permet en revanche de diminuer la viscosité d'une encre, et de permettre un écoulement ou une impression plus fluide. Les encres à base d'eau conviennent particulièrement pour les impressions jet d'encre ou les stylos à plume.

De préférence, l'encre selon l'invention est formulée avec un mélange de solvant aqueux et huileux. Le mélange d'un solvant aqueux et huileux permet d'adapter la viscosité de l'encre en fonction de l'application souhaitée. Cela permet donc une performance d'écriture ou d'impression constante.

Le solvant huileux, convenant à la mise en oeuvre de l'invention, est d'origine végétale et préférentiellement choisi parmi le groupe comprenant l'huile de soja, l'huile de brocoli, l'huile de tournesol, l'huile de colza, l'huile de germe de blé, l'huile de maïs, l'huile de palme, l'huile d'olive, l'huile de lin, l'huile de chanvre, l'huile de jojoba *(Simmonda chinensis),* les résines naturelles, les cires végétales ou animales...

On peut citer comme résine naturelle, convenant à la mise en oeuvre de l'invention, la gomme de guar, la gomme de xanthane, la gomme arabique, également appelée gomme d'acacia, la gomme-laque, la colophane, la gomme gellane ...

On peut également citer comme cire convenant à la mise en oeuvre de l'invention, la cire d'abeille, les cires végétales, la cire de jojoba *(Simmonda chinensis).*

Selon un aspect préférentiel de l'invention, l'agent mouillant utilisé est un dérivé de la lécithine de soja.

Les inventeurs ont en effet découvert que la lécithine de soja est un excellent agent mouillant (tensioactif) pour la formulation d'encre d'impression ou d'écriture. Elle permet notamment d'optimiser la mise en suspension du marqueur luminescent, tout particulièrement quand il est constitué de cristallites, dans le solvant. Elle permet aussi de favoriser la mise en suspension des agents colorants, notamment des pigments.

Selon un autre aspect de l'invention, l'encre comprend en outre au moins un agent humectant choisi parmi le groupe constitué par la glycérine végétale, l'éthylène glycol, le diéthylène glycol, le propylène glycol.

L'incorporation d'un humectant dans une encre hydrosoluble permet notamment d'empêcher l'évaporation de l'eau et son dessèchement. De préférence, l'humectant entrant dans la composition de l'encre selon l'invention est la glycérine végétale. La glycérine présente de nombreux avantages :
- elle est non toxique,
- elle est miscible dans l'eau et dans l'huile,
- sa couleur n'interfère pas avec l'utilisation de pigments ou de colorants.

La glycérine est un sous-produit de la transestérification d'huiles végétales, ce qui est compatible avec un des objectifs de l'invention, à savoir la mise en valeur de sous-produits issus de processus industriels de transformation de végétaux.

L'encre selon l'invention peut contenir en outre un agent conservateur, ledit agent conservateur étant choisi parmi le groupe constitué par l'acide citrique, l'acide acétique, l'acide lactique.

L'utilisation d'un tel conservateur permet d'éviter le développement de microorganismes dans l'encre et le rancissement des solvants huileux. L'utilisation de conservateurs d'origine végétale tels que l'acide citrique, l'acide lactique ou l'acide acétique permet de formuler une encre non toxique pour les opérateurs, les utilisateurs et l'environnement.

Selon un mode préféré de réalisation, ledit au moins un agent colorant est d'origine naturelle et est choisi parmi le groupe constitué par les oxydes et silicates de cuivre, les pigments d'origine naturelle, les colorants alimentaires...

On peut citer à titre d'exemple de colorant alimentaire E131 (aussi appelé bleu patenté V), E132 (aussi appelé indigo ou carmin d'indigo), E133 (le bleu brillant FCP de formule C₃₇H₃₄N₂Na₂O₉S₃), E163 (aussi connu sous le nom d'anthocyane), ...

On peut également citer les pigments commercialisés sous les références FDS-AI9, par la société Colorey, et Bimacide Blue 92, par la société Bima83.

Dans un mode de réalisation avantageux, l'encre selon l'invention comprend en outre au moins un additif choisi parmi les agents thixotropes, les agents tensioactifs, les agents gélifiants, les agents viscosants, les agents filmogènes, des anti-oxydants, de la silice alimentaire, de l'amidon, des dérivés de l'amidon, des agents anti-rouilles et des agents conservateurs.

L'incorporation d'additifs permet d'adapter les caractéristiques physicochimiques en fonction des applications souhaitées. On peut, par exemple, utiliser un agent antirouille pour la formulation d'une encre pour stylo plume. Les anti-oxydants se révèlent particulièrement utiles pour des encres contenant des huiles, afin d'éviter leur rancissement et leur dégradation précoce. Les agents thixotropes permettent notamment la formulation d'encre gel pour stylo à billes.

De préférence, l'additif est du perméat de lait de soja. Préférentiellement ce perméat de lait de soja entre dans la composition de l'encre selon l'invention à raison de 0 à 5% en poids.

On comprend par perméat de lait de soja le produit provenant de l'ultra filtration du lait de soja. Ce perméat comprend des lipides, des protéines, des oligosaccharides et des minéraux. Les inventeurs ont en effet découvert qu'il constitue un excellent agent filmogène et un tensioactif pour la formulation d'une encre selon l'invention.

Dans un mode de réalisation préféré, l'encre selon l'invention répond, en pourcentages massiques, à la formule suivante :
- Marqueur photo luminescent : 1% à 5%
- Agent mouillant : 1% à 2%
- Agent colorant : 1% à 1,5%
- Humectant : 5% à 10%
- Conservateur : 0,1 % à 1%
- Solvant : qsp 100%
- Perméat de lait de soja : 0 à 5 %

La détermination de l'origine du produit et/ou du document portant une encre selon la présente invention, et de là son éventuelle authentification, pourra comprendre les étapes préalables suivantes :
a) pré-enregistrement dans une base de données de la longueur d'onde émise par une encre X intégrant un marqueur à base de lanthanide selon l'invention lorsqu'elle est exposée à un rayonnement UV de longueur d'onde prédéterminée (par exemple, 312 nm ou 365 nm),
b) attribution de l'encre X à un détenteur autorisé,
puis les étapes suivantes
c) exposition du produit ou du document sur lequel figure une encre à un rayonnement UV ayan la longueur d'onde prédéterminée,
d) détection de la longueur d'onde émise par ladite encre,
e) vérification auprès de ladite base de données que ladite longueur d'onde mesurée à l'étape d) est égale à ladite longueur d'onde enregistrée à l'étape a).

Si les longueurs d'onde sont concordantes, il peut être confirmé que le produit ou l'écrit à pour origine le détenteur autorisé. Si la longueur d'onde mesurée est différente de celle enregistrée et associée au détenteur autorisé, le produit ou l'écrit est identifié comme contrefait.

Un contrefacteur potentiel ne peut donc pas se contenter d'incorporer un marqueur émettant une longueur d'onde vaguement proche de celle de l'encre d'origine. Il peut encore moins se contenter d'incorporer n'importe quel marqueur photoluminescent. Encore faut-il qu'il incorpore un marqueur photoluminescent ayant exactement la même longueur d'onde d'émission que celle enregistrée sous le nom du titulaire de l'encre.

### 4. Description d'un mode de réalisation de l'invention

Le principe général de l'invention repose sur la formulation d'une encre facilement biodégradable et non toxique incorporant un marqueur photoluminescent à base d'au moins un lanthanide permettant de déterminer l'origine de l'impression ou de l'écriture réalisée grâce à elle.

L'encre selon l'invention est sans danger pour le consommateur et pour l'environnement.

L'utilisation d'un ou plusieurs lanthanides permet des combinaisons à l'infini, et donc la conception de marqueurs uniques. Cette unicité se traduit également par l'unicité de longueur d'onde d'émission, qui permet de discerner l'encre d'origine d'une contrefaçon. La très grande diversité de marqueurs disponibles permet de formuler une encre personnalisée, spécifique d'un individu, d'une société ou d'une institution. Enfin, cette diversité complique également la contrefaçon de l'encre et sa caractérisation par rétro-ingénierie.

Deux exemples de réalisation d'une encre selon l'invention sont donnés ci-après

### 5.1 Exemple 1 - Formulation d'une encre bleue selon l'invention pour stylo plume.

Une formulation d'une encre bleue pour stylo à plume est donnée dans le tableau 1. Dans cette formulation, les pourcentages indiqués sont des pourcentages pondéraux.

**Tableau 1**

| Composant | Quantité (% poids) | Rôle |
|---|---|---|
| Eau | 89 | Solvant |
| Marqueur incluant du Terbium | 1,4 | Marqueur de traçabilité et d'authentification |
| Lécithine de soja | 1,4 | Tensioactif |
| FDS-AI9 (Colorey) | 1 | Colorant bleu |
| Acide citrique | 0,2 | Conservateur |
| Glycérine végétale | 7 | Humectant |

Le marqueur, dans cet exemple, a été conçu et fourni par la société française Olnica.

Il se présente sous la forme d'une poudre blanche micronisée constituée d'une cristallite. Sa formule est la suivante : Tb₂ (C₈O₄H₄)₃(H₂O)₄.

Les différents composants sont dissous dans l'eau, dans une cuve sous agitation.

Une telle encre émet une longueur d'onde à 545 nm lorsqu'elle est exposée à une lampe UV à 312 nm.

### 5.2 Exemple 2 - Formulation d'une encre gel bleue pour stylo à bille selon l'invention.

Une formulation d'une encre bleue pour stylo à bille est donnée dans le tableau 2. Dans cette formulation, les pourcentages indiqués sont des pourcentages pondéraux.

**Tableau 2**

| Composant | Quantité (% poids) | Rôle |
|---|---|---|
| Huile de soja raffinée | qsp 100% | Solvant |
| Glycérol | 15 | Solvant |
| Perméat de soja | 5 | Filmogène et tensioactif |
| Bleu d'outremer 54 | 1 à 5 | Pigment |
| Bleu ultramarine | 1 à 5 | Pigment |
| E133 (bleu brillant) | 1 à 5 | Colorant alimentaire |
| Marqueur photoluminescent | 5 | Marqueur de traçabilité et d'authentification |
| Carraghénanes kappa | 0,1 à 1 | Agent gélifiant |
| Argile hydrophile | 0,5 à 2 | Agent thixotrope |
| Amidon | 0,5 à 5 | Épaississant et gélifiant |

Le marqueur, dans cet exemple, a également été conçu et fourni par la société française Olnica.

Il se présente sous la forme d'une poudre blanche micronisée constituée d'une cristallite. Sa formule est la suivante : Tb₂(C₈O₄H₄)₃(H₂O)₄.

Les différents composants sont dissous dans l'eau, dans une cuve sous agitation.

Une telle encre émet une longueur d'onde à 545 nm lorsqu'elle est exposée à une lampe UV à 312 nm.

### 5. Applications industrielles

Les formulations selon l'invention conviennent à la fabrication d'encres pour stylos à billes ou pour stylos à plume.

Grâce à l'invention, il est possible de formuler des encres personnalisées, permettant de déterminer l'origine d'une écrite ou d'une signature.

L'encre selon l'invention convient également à la fabrication d'encres d'impression pour des documents officiels, comme les passeports, les cartes d'identité, les visas, les permis de séjours, de conduire ou de travail, les certificats de décès ou de naissance, chèques bancaires ...

L'encre selon l'invention convient également à la formulation d'encres pour billets de banque.

L'encre selon l'invention peut également être utilisée pour l'impression d'emballages, pour l'impression d'étiquettes ou pour l'impression de motifs sur des tissus.

## Revendications

1. Encre dont la formulation comprend au moins un solvant, au moins un agent colorant, au moins un agent mouillant et au moins un marqueur **caractérisé en ce que** :
- ledit solvant est de l'huile de soja,
- ledit agent mouillant est de la lécithine de soja,
- ledit marqueur est un marqueur photoluminescent intégrant au moins un lanthanide.

2. Encre selon la revendication 1 **caractérisée en ce qu'**elle comprend en outre au moins un agent humectant choisi dans le groupe comprenant la glycérine constituée par un sous-produit de la transestérification d'huiles végétales, l'éthylène glycol, le diéthylène glycol, le propylène glycol.

3. Encre selon l'une des revendications 1 ou 2 **caractérisée en ce qu'**elle comprend en outre au moins un agent conservateur choisi dans le groupe constitué par l'acide citrique, l'acide acétique et l'acide lactique.

4. Encre selon l'une des revendications 1 à 3 **caractérisée en ce que** ledit au moins un agent colorant est d'origine naturelle et est choisi parmi le groupe constitué par les oxydes et silicates de cuivre, les pigments d'origine naturelle, les colorants alimentaires.

5. Encre selon l'une des revendications 1 à 4 **caractérisée en ce qu'**elle comprend en outre au moins un additif constitué par du perméat provenant de l'ultrafiltration de lait de soja.

6. Encre selon l'une des revendications 1 à 5 **caractérisée en ce qu'**elle répond, en pourcentages massiques, à la formulation suivante:
- Agent mouillant : 1-2%
- Marqueur photoluminescent : 1-5%
- Agent colorant : 1-1,5%
- Humectant : 5-10%
- Conservateur : 0,1-1%
- Perméat provenant de l'ultrafiltration de lait de soja : 0 à 5 %
- Solvant : qsp 100%

## Patentansprüche

1. Tinte, deren Formulierung mindestens ein Lösungsmittel, mindestens ein Farbmittel, mindestens ein Benetzungsmittel und mindestens ein Markierungsmittel umfasst, **dadurch gekennzeichnet, dass**:
- das Lösungsmittel Sojaöl ist,
- das Benetzungsmittel Sojalecithin ist,
- das Markierungsmittel ein photolumineszierendes Markierungsmittel ist, das mindestens ein Lanthanid beinhaltet.

2. Tinte nach Anspruch 1, **dadurch gekennzeichnet, dass** sie ferner mindestens ein Feuchthaltemittel umfasst, das aus der Gruppe umfassend Glycerin, das aus einem Nebenprodukt der Umesterung von pflanzlichen Ölen gebildet ist, Ethylenglykol, Diethylenglykol, Propylenglykol ausgewählt ist.

3. Tinte nach Anspruch 1 oder 2, **dadurch gekennzeichnet, dass** sie ferner mindestens ein Konservierungsmittel umfasst, das aus der Gruppe bestehend aus Zitronensäure, Essigsäure und Milchsäure ausgewählt ist.

4. Tinte nach einem der Ansprüche 1 bis 3, **dadurch gekennzeichnet, dass** das mindestens eine Farbmittel natürlicher Herkunft ist und aus der Gruppe bestehend aus Kupferoxiden und -silikaten, Pigmenten natürlicher Herkunft, Lebensmittelfarbstoffen ausgewählt ist.

5. Tinte nach einem der Ansprüche 1 bis 4, **dadurch gekennzeichnet, dass** sie ferner mindestens einen Zusatzstoff umfasst, der aus Permeat aus der Ultrafiltration von Sojamilch gebildet ist.

6. Tinte nach einem der Ansprüche 1 bis 5, **dadurch gekennzeichnet, dass** sie, in Gewichtsprozent, folgender Rezeptur entspricht:
- Benetzungsmittel: 1-2%
- photolumineszierendes Markierungsmittel: 1-5%
- Farbmittel: 1-1,5%
- Feuchthaltemittel: 5-10%
- Konservierungsmittel: 0,1-1%
- Permeat aus der Ultrafiltration von Sojamilch: 0 bis 5 %
- Lösungsmittel: in ausreichender Menge für 100%.

## Claims

1. Ink whose formulation comprises at least one solvent, at least one colouring agent, at least one wetting agent and at least one marker, **characterized in that**:
- the solvent is soya oil,
- the wetting agent is soya lecithin,
- the marker is a photoluminescent marker incorporating at least one lanthanide.

2. Ink according to Claim 1, **characterized in that** it further comprises at least one humectant selected from the group consisting of glycerine constituted by a by-product of the transesterification of plant oils, ethylene glycol, diethylene glycol, propylene glycol.

3. Ink according to any one of Claims 1 or 2, **characterized in that** it further comprises at least one preservative selected from the group consisting of citric acid, acetic acid and lactic acid.

4. Ink according to any one of Claims 1 to 3, **characterized in that** the at least one coloring agent is of natural origin and is selected from the group consisting of copper oxides and silicates, pigments of natural origin, food coloring.

5. Ink according to any one of Claims 1 to 4, **characterized in that** it further comprises at least one additive consisting of permeate coming from the ultrafiltration of soy milk.

6. Ink according to any one of Claims 1 to 5, **characterized in that** it corresponds, in percentages by weight, to the following formulation:
- Wetting agent: 1-2%
- Photoluminescent marker: 1-5%
- Coloring agent: 1-1,5%
- Humectant: 5-10%
- Preservative: 0.1-1%
- Permeate from the ultrafiltration of soy milk: 0 to 5%
- Solvent: qsf 100%
